# EUROPEAN PATENT SPECIFICATION

(11) **EP 2 804 235 B1**
(45) Date of publication and mention of the grant of the patent: **16.08.2017**
(21) Application number: 14152976.8
(22) Date of filing: 29.01.2014
(51) Int. Cl.: H01M 2/04, H01M 2/12, H01M 2/26, H01M 2/30, H01M 10/42

(54) **Secondary battery**
Sekundärbatterie
Batterie secondaire

(30) Priority: 15.05.2013 US 201361823646 P; 16.10.2013 US 201314054930
(43) Date of publication of application: 19.11.2014
(73) Proprietor: Samsung SDI Co., Ltd., Yongin-si, Gyeonggi-do (KR)
(72) Inventor: Kim, Duk-Jung, Yongin-si (KR)
(74) Representative: Gulde & Partner

(56) References cited:
- EP-A1- 2 509 133
- JP-A- H11 339 737
- US-A1- 2012 308 874

## Description

### BACKGROUND

### 1. Field

One or more embodiments relate to a secondary battery.

### 2. Description of the Related Art

In general, a secondary battery is rechargeable and dischargeable, unlike a primary battery that may not be rechargeable. A secondary battery is used as an energy source in mobile devices, electric vehicles, hybrid vehicles, electric bicycles, and uninterruptible power supplies, in a type of a single battery or in a battery module, in which a plurality of batteries are electrically connected as a single unit, according to kinds of external devices to which the secondary battery is applied.

JP H11 339737 A concerns a rectangular battery and describes a sealing plate for a rectangular case wherein the sealing plate has a concave step on an edge part of the sealing plate for coping with variations of dimensions of the sealing plate and the rectangular case.

### SUMMARY

The present invention is defined by the appended claims. Accordingly, embodiments are directed to a battery, comprising: an electrode assembly; a case housing the electrode assembly; and a cap plate for sealing the case housing the electrode assembly, the cap plate comprising: a cover portion that covers the electrode assembly; a support portion having a first thickness, the support portion being offset along a first direction from the cover portion; and a reinforcing portion that connects the cover portion and the support portion, the reinforcing portion having a processing thickness that is greater than the first thickness, the first thickness and the processing thickness being measured along the first direction, wherein the reinforcing portion extends diagonally between the cover portion and the support portion wherein the reinforcing portion is arranged between the cover portion and the supporting portion wherein the support portion is disposed to face an inner surface of the case and wherein the support portion is secured to the inner surface of the case such that the cap plate is located lower than an upper end surface of the case and wherein the reinforcing portion extends along an entire periphery of the cover portion. The support portion may be further from a bottom of the case than the cover portion. The cover portion may have a second thickness measured along the first direction, the second thickness being smaller than the processing thickness.

The reinforcing portion extends along an entire periphery of the cover portion.

The support portion may extend along an entire periphery of the cover portion.

The cover portion may have opposing long sides and opposing short sides, the reinforcing portion extending along at least the long sides.

The cap plate may include a safety vent in the cover portion.

The reinforcing portion has opposing upper and lower surfaces, the processing thickness being a minimum of a separation of the upper and lower surfaces along the first direction.

The processing thickness may be an average of a separation the upper and lower surfaces along the first direction of the reinforcing portion.

The reinforcing portion may be non-linear between the cover portion and the supporting portion. Embodiments are directed to a battery including an electrode assembly, a case housing the electrode assembly, and a cap plate for sealing the case. The cap plate may include a cover portion that covers the electrode assembly, a support portion having a first thickness, the support portion being offset along a first direction from the cover portion, and a reinforcing portion that connects the cover portion and the support portion. The reinforcing portion may have a processing thickness that is greater than the first thickness, the first thickness and the processing thickness being measured along the first direction.

The support portion may be further from a bottom of the case than the cover portion.

The reinforcing portion may extend diagonally between the cover portion and the support portion. The cover portion may have a second thickness measured along the first direction, the second thickness being smaller than the processing thickness.

The battery reinforcing portion may extend along an entire periphery of the cover portion.

The cover portion may have opposing long sides and opposing short sides, the reinforcing portion extending along at least the long sides.

The support portion may be secured to an inner surface of the case.

### BRIEF DESCRIPTION OF THE DRAWINGS

Features will become apparent to those of ordinary skill in the art by describing in detail exemplary embodiments with reference to the attached drawings in which:
FIG. 1 illustrates a perspective view of a secondary battery according to an embodiment;
FIG. 2 illustrates an exploded perspective view of the secondary battery shown in FIG. 1;
FIG. 3 illustrates a cross-sectional view of the secondary battery taken along a line III-III of FIG. 1;
FIG. 4 illustrates a cross-sectional view of a cap plate shown in FIG. 3;
FIG. 5 illustrates a cross-sectional view showing an enlarged view of a part shown in FIG. 4;
FIG. 6 illustrates a perspective view of a cap plate according to an embodiment; and
FIGS. 7 and 8 illustrate diagrams exemplary showing various loads applied to the cap plate.

### DETAILED DESCRIPTION

Reference will now be made in detail to embodiments, examples of which are illustrated in the accompanying drawings, wherein like reference numerals refer to the like elements throughout.

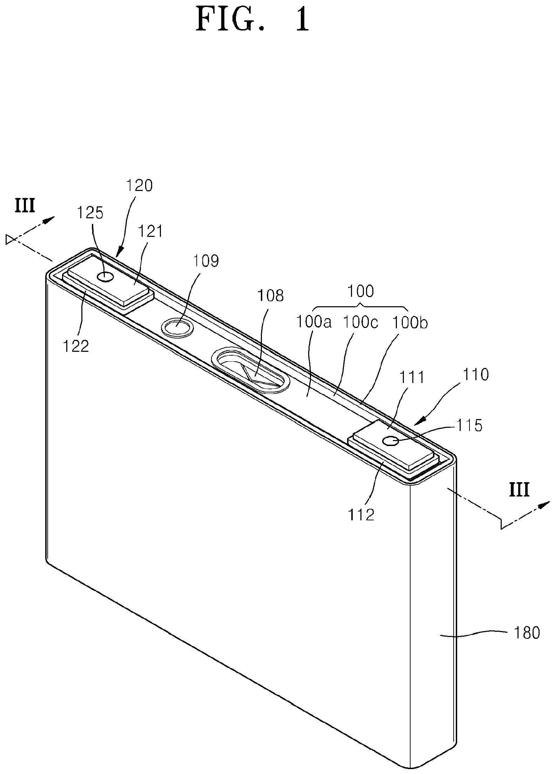

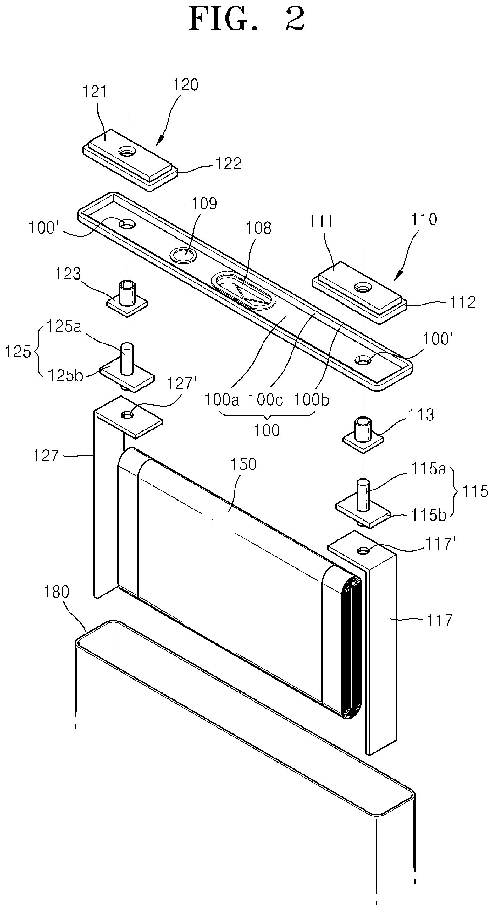

FIG. 1 illustrates a perspective view of a secondary battery according to an embodiment. FIG. 2 illustrates an exploded perspective view of the secondary battery shown in FIG. 1.

Referring to FIGS. 1 and 2, the secondary battery includes a case 180 accommodating an electrode assembly 150 therein, and a cap plate 100 closing the case 180 in which the electrode assembly 150 is accommodated. For example, the cap plate 100 may be coupled onto the case 180, and a welding portion may be formed along edges of the cap plate 100 and the case 180 that are in contact with each other. Such a welding portion may be formed by a laser welding operation performed between the cap plate 100 and the case 180.

The cap plate 100 includes a cover portion 100a, a support portion 100b, and a reinforcing portion 100c. The cover portion 100a forms a main body of the cap plate 100 and extends over an upper portion of the electrode assembly 150. The support portion 100b is on an outer circumference of the cover portion 100a and coupled to the case 180. The reinforcing portion 100c connects the cover portion 100a and the support portion 100b to each other, and extends from the cover portion 100a and the support portion 100b in a bent shape so as to connect the cover portion 100a and the support portion 100b having a height difference therebetween.

A pair of electrode terminals 110 and 120 having opposite polarities to each other, e.g., a first electrode terminal 110 and a second electrode terminal 120, may be formed on the cap plate 100. In particular, the first and second electrode terminals 110 and 120 may be formed to penetrate through the cover portion 100a of the cap plate 100. For example, the first and second electrode terminals 110 and 120 are electrically connected to the electrode assembly 150 accommodated in the secondary battery, and the first and second electrode terminals 110 and 120 are electrically connected to first and second electrode plates of the electrode assembly 150, respectively. Thus, the first and second electrode terminals 110 and 120 may function as a positive terminal and a negative terminal for supplying discharging power accumulated in the secondary battery to outside or for receiving a charging power from the outside. For example, the first and second electrode terminals 110 and 120 may be formed on opposite sides of the secondary battery. Alternatively, the cap plate 100 of the secondary battery may be electrically connected to the electrode assembly 150 to serve as a terminal, allowing one of the first and second electrode terminals 110 and 120 to be omitted.

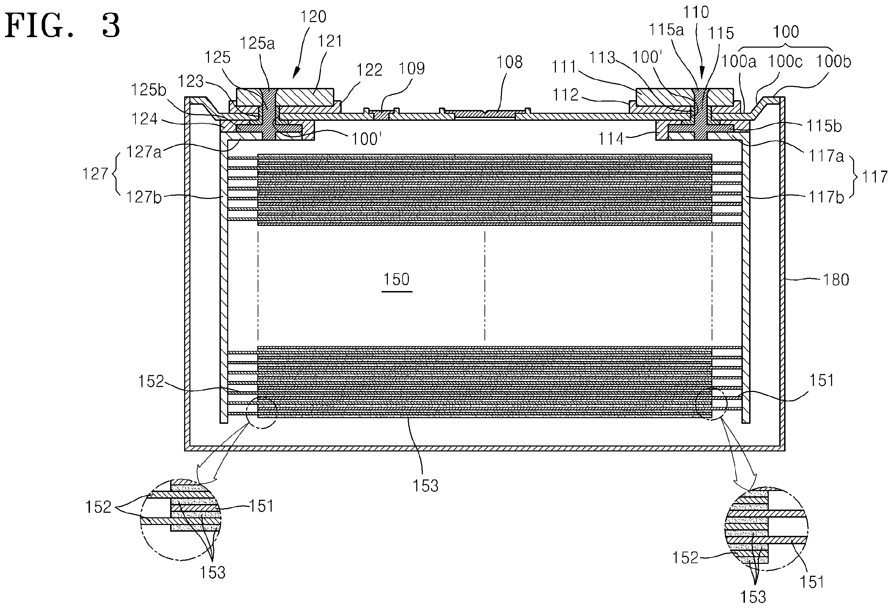

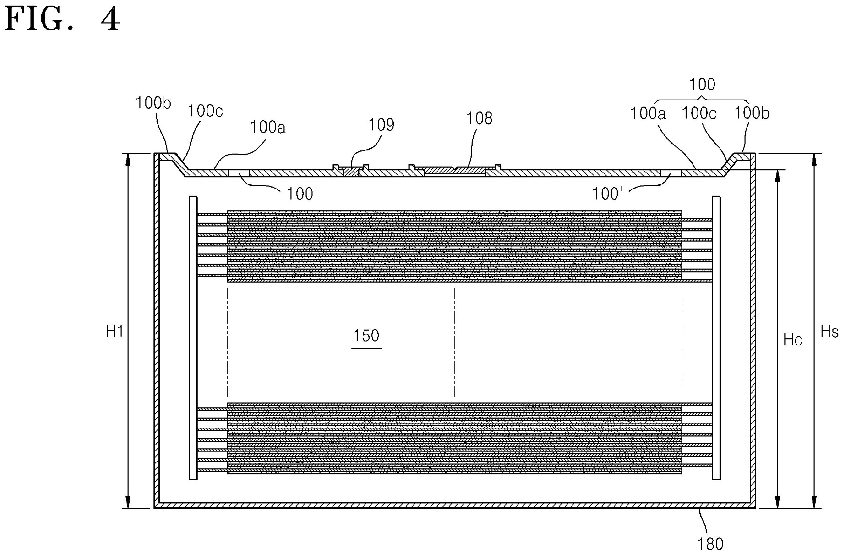

FIG. 3 illustrates a cross-sectional view of the secondary battery taken along a line III-III of FIG. 1. FIG. 4 illustrates a cross-sectional view of the cap plate 100 shown in FIG. 3 without additional elements connected thereto.

Referring to FIG. 3, the cap plate 100 is coupled to an upper end of the case 180, in which the electrode assembly 150 is accommodated, and may seal an opening of the case 180. For example, the cap plate 100 and the case 180 may be coupled to each other by welding edge of the cap plate 100.

The cap plate 100 includes the cover portion 100a formed on an upper portion of the electrode assembly 150, the support portion 100b supporting the cover portion 100a from an edge of the cover portion 100a, and the reinforcing portion 100c connecting the cover portion 100a and the support portion 100b to each other and processed to have a thickness that is greater than peripheral portions.

The cover portion 100a forms a main body of the cap plate 100, and may be disposed to face the electrode assembly 150. For example, a safety vent 108 that has a relatively weak structure so as to be broken to provide a gas discharge passage when an internal pressure in the secondary battery exceeds a set point may be formed in the cover portion 100a. Also, an electrolyte injection hole for injecting an electrolyte into the case 180 may be formed in the cover portion 100a, and the electrolyte injection hole may be closed by a sealing lid 109 after finishing the injection of the electrolyte.

The support portion 100b may be formed along the edge of the cap plate 100, and may form a coupling portion between the cap plate 100 and the case 180, e.g., a welding portion through laser welding. The support portion 100b supports the cap plate 100 by coupling to the case 180 through the welding. For example, the support portion 100b may be disposed to face an inner surface of the case 180 and may be coupled to the inner surface of the case 180 by the welding process. The welding portion may be formed along with side surfaces of the support portion 100b and the case 180 that contact each other.

Referring to FIG. 4, a height Hs of the upper surface of the support portion 100b may be equal to or lower than a height H1 of an upper end surface of the case 180. Here, the height Hs of the upper surface of the support portion 100b and the height H1 of the upper end surface of the case 180 may be measured from the same level, e.g., a bottom surface of the secondary battery.

The height Hs of the upper surface of the support portion 100b is relatively low denotes that the cap plate 100 including the support portion 100b is located at a relatively lower position. When the cap plate 100 is located lower than the case 180 (the upper end surface of the case), a wide mounting space may be ensured on the cap plate 100. For example, circuit components (not shown) may be installed on the cap plate 100. Such circuit components may include a circuit for controlling charging and discharging operations of the secondary battery, a wire (not shown) for transmitting/receiving status information of the secondary battery or control signals, a lead member (not shown) for leading electric connection, and/or a safety device (not shown) for preventing abnormal operations such as over-charging or over-discharging of the secondary battery may be disposed on the cap plate 100. Therefore, if a large mounting space may be ensured on the cap plate 100, the above circuit components (not shown) may be mounted easily. Referring to FIG. 4, the support portion 100b may be located a step above the cover portion 100a. That is, the height Hs of the upper surface of the support portion 100b may be greater than a height Hc of an upper surface of the cover portion 100a. The height Hs and the height Hc may be measured based on the same level, for example, the bottom surface of the secondary battery. When the cover portion 100a is located relatively low, a large mounting space on which the circuit components (not shown) are mounted may be ensured on the cover portion 100a.

The reinforcing portion 100c is formed between the cover portion 100a and the support portion 100b. For example, the reinforcing portion 100c may be formed as a boundary surrounding the cover portion 100a along with the outer circumference of the cover portion 100a. The reinforcing portion 100c is bent to connect the cover portion 100a and the support portion 100c that are stepped with each other, and the bent structure may contribute to improvement of the strength of the cap plate 100. The cap plate 100 may be formed of a metal thin film that may be weak against external load and may buckle due to compressive load or bending load. Even though the cap plate 100 is not severely deformed by such as buckling or yielding, the safety vent 108 of the cap plate 100 may be broken due to even slight deformation. Thus, the reinforcing portion 100c is formed to prevent or reduce deformation of the cap plate 100.

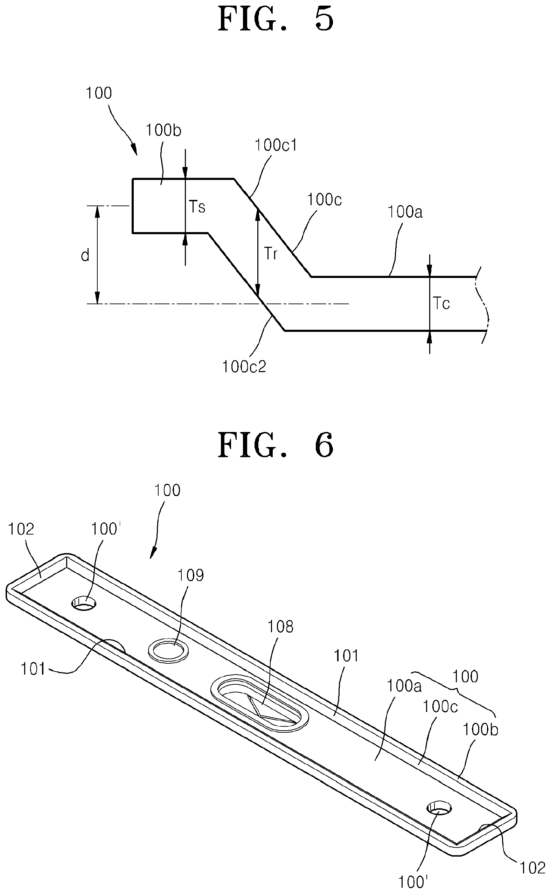

FIG. 5 is a partially enlarged view of the cap plate 100 shown in FIG. 4. Referring to FIG. 5, the reinforcing portion 100c connects the cover portion 100a and the support portion 100b that are stepped with each other at different heights, that is, the reinforcing portion 100c may extend from the cover portion 100a in a diagonal direction to connect the cover portion 100a and the support portion 100b to each other.

The reinforcing portion 100c may be formed to have a processing thickness Tr that is greater than that of the cover portion 100a and of the support portion 100b. The processing thickness Tr is measured in the same direction of measuring a thickness Tc of the cover portion 100a and a thickness Ts of the support portion 100b, and may be generally measured in a thickness direction of the cap plate 100 that has a flat shape.

The processing thickness Tr is defined as a width between a first surface 100c1 and a second surface 100c2 of the reinforcing portion 100c, which are opposite to each other, and as described above, may be measured in the thickness direction of the cap plate 100. If the opposite first and second surfaces 100c1 and 100c2 of the reinforcing portion 100c are parallel, the reinforcing portion 100c may have a uniform processing thickness Tr throughout the entire part of the reinforcing portion 100c. Otherwise, if the first and second surfaces 100c1 and 100c2 of the reinforcing portion 100c are not parallel, the processing thickness Tr may be variable at different points of the reinforcing portion 100c.

Throughout the present specification, when the processing thickness Tr of the reinforcing portion 100c is indicated as being greater than the thickness Tc of the cover portion 100a and the thickness Ts of the support portion 100b, the processing thickness Tr of the reinforcing portion 100c may denote a minimum processing thickness throughout the entire part of the reinforcing portion 100c. For example, if the first and second surfaces 100c1 and 100c2 of the reinforcing portion 100c are not parallel, the processing thickness Tr of the reinforcing portion 100c may be variable according to measured points. The processing thickness Tr of the thinnest point of the reinforcing portion 100c may be greater than the thickness Tc or Ts of the cover portion 100a and the support portion 100b. Since the load that the reinforcing portion 100c may bear relates to the weakest point of the reinforcing portion 100c and the load is concentrated onto the weakest portion to cause the buckling deformation, the minimum processing thickness Tr of the reinforcing portion 100c is formed to be greater than at least the thickness Tc and Ts of the cover portion 100a and the support portion 100c, thereby improving the strength of the reinforcing portion 100c.

However, if the reinforcing portion 100c is formed by pressing a plate-shaped base material, the first and second surfaces 100c1 and 100c2 of the reinforcing portion 100c are generally in parallel with each other, and thus, the processing thickness Tr between the first and second surfaces 100a1 and 100a2 is constant. Thus, an average processing thickness Tr, not the minimum processing thickness Tr, may be greater than the thickness of the cover portion 100a and the support portion 100b so that entire strength of the reinforcing portion 100c may be improved.

In particular, there is a relationship Tr>Tc between the processing thickness Tr of the reinforcing portion 100c and the thickness Tc of the cover portion 100a. Also, the processing thickness Tr of the reinforcing portion 100c is greater than the thickness Ts of the support portion (Tr>Ts). In the embodiment of the present invention, the cover portion 100a and the support portion 100b may be formed to have the same thickness (Tc ≒ Ts). For example, when a plate-shaped base material having a constant thickness is pressed, the cover portion 100a and the support portion 100b generally have the same thickness as each other.

The cap plate 100 may be formed by performing a press treatment onto the plate-shaped base material. By performing the press treatment that interposes a raw material metal plate between an upper die and a lower die and applies a predetermined pressure thereto, the bent reinforcing portion 100c may be formed in the raw material metal plate. For example, bending shape and the processing thickness Tr of the reinforcing portion 100c may be determined according to shapes of molds in the upper die and the lower die. For example, when increasing a processing depth d that corresponds to a height difference between the support portion 100b and the cover portion 100a, the processing thickness Tr of the reinforcing portion 100c may be increased. However, the processing thickness Tr of the reinforcing portion 100c may vary depending on other processing variables such as a thickness of the base material and pressing pressure, which may affect the shape of the reinforcing portion 100c, as well as the processing depth d.

FIG. 6 illustrates a perspective view of the cap plate 100 of the secondary battery according to the embodiment. Referring to FIG. 6, the reinforcing portion 100c may be continuously formed along with longer sides and shorter sides of the cap plate 100, and may be formed as a closed loop that completely surrounds the cover portion 100a inside the cap plate 100. As will be described later, the cap plate 100 may receive compressive loads or bending loads in various directions during manufacturing the secondary battery, collecting a plurality of secondary batteries to form a module, or driving the secondary battery. Thus, the reinforcing portion 100c of a closed loop shape may be formed to improve resistance against the loads in the various directions.

In particular, the reinforcing portion 100c may include long sides 101 extending along the longer sides of the cap plate 100 and short sides 102 extending along the shorter sides of the cap plate 100. The long sides 101 and the short sides 102 may be formed to contact each other, or connection portions (not shown) for connecting the long sides 101 and the short sides 102 may be additionally formed.

For example, if the reinforcing portion 100c is not formed continuously, but includes a disconnected portion, stress may be concentrated on the disconnected portion of the reinforcing portion 100c, thereby deforming the reinforcing portion 100c. However, according to the present embodiment, the reinforcing portion 100c may be selectively formed on a local point in consideration of a load applied in a certain direction. For example, the short sides 102 only may be selectively formed in consideration of the compressive load applied in a back-and-forth direction or the long sides 101 only may be selectively formed in consideration of the bending load applied in an up-and-down direction. However, in consideration of an aspect ratio of the cap plate 100, the reinforcing portion 100c may be formed at least long the longer sides that are likely to be buckled.

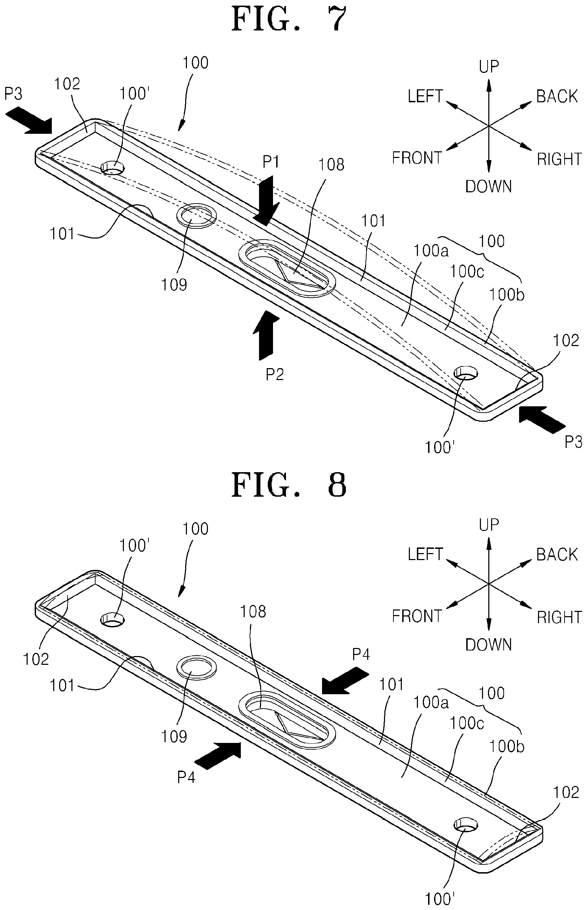

FIG. 7 is a diagram showing examples of loads applied to the cap plate 100.

Referring to FIG. 7, a first pressure P1 may be applied from an upper direction to the cap plate 100. When circuit components (not shown) are mounted on the cap plate 100, the first pressure P1 may be generated due to loads generated during mounting the circuit components, e.g., during pressing the circuit components onto the cap plate 100, as well as weight of the circuit components themselves.

A second pressure P2 may be applied from a lower direction to the cap plate 100. An internal pressure in the secondary battery may rise according to the charging and discharging operations. If the internal pressure reaches a set breaking point of the safety vent 108, the second pressure P2 is still applied to the cap plate 100 before the internal pressure is released due to breaking of the safety vent 108.

A third pressure P3 may be applied from left and right directions to the cap plate 100. In a module structure in which a plurality of secondary batteries are stacked, a restraining plate (not shown) may be provided along left and right side surfaces of the secondary batteries. Thus, the third pressure P3 may be applied from the left and right directions while mounting the restraining plate (not shown). Otherwise, if the plurality of secondary batteries are arranged in left and right directions, for example, the plurality of secondary batteries are stacked in plural rows, the third pressure P3 may be applied to the secondary battery due to swelling of adjacent secondary batteries.

For example, the long sides 101 of the reinforcing portion 100c may effectively resist against the first and second pressures P1 and P2 from the upper and lower portions, and the third pressure P3 from the left and right directions. In particular, the long sides 101 of the reinforcing portion 100c may effectively restrain the buckling deformation of the cap plate 100 according to the aspect ratio of the cap plate 100.

FIG. 8 is a diagram showing another example of a load applied to the cap plate 100. Referring to FIG. 8, a fourth pressure P4 may be applied from back and forth directions to the cap plate 100. In a module structure in which a plurality of secondary batteries are stacked in rows in the back-and-forth direction, the secondary batteries may press adjacent secondary batteries from the back and forth directions due to the swelling caused by the charging and discharging operations. For example, the short sides 102 of the reinforcing portion 100c may effectively resist against the fourth pressure P4 from the back and forth directions.

Hereinafter, referring to FIGS. 2 and 3, configurations of the secondary battery will be described below. Referring to FIGS. 2 and 3, the secondary battery includes the electrode assembly 150, the electrode terminals 110 and 120, and current collecting members 117 and 127 intervening electrical connections between the electrode assembly 150 and the electrode terminals 110 and 120. In addition, the secondary battery may include the case 180 accommodating the electrode assembly 150, and the cap plate 100 sealing an opening of the case 180, in which the electrode assembly 150 is accommodated.

The electrode assembly 150 may be accommodated in the case 180 of the secondary battery, and may include a first electrode plate 151 and a second electrode plate 152 having opposite polarities to each other, and a separator 153 disposed between the first and second electrode plates 151 and 152. The electrode assembly 150 may be formed as a winding type, in which the first and second electrode plates 151 and 152 and the separator 153 are wound as jelly rolls, or as a stacked type, in which the first and second electrode plates 151 and 152 and the separator 153 are alternately stacked. The cap plate 100 is assembled on the upper opening of the case 180, in which the electrode assembly 150 is accommodated, to seal the electrode assembly, and the electrode terminals 110 and 120 that are electrically connected to the electrode assembly 150 may be formed on an outer portion of the cap plate 100 for electrically connecting the electrode assembly 150 to an external circuit (not shown) or the electrode assembly 150 to neighboring secondary battery. The electrode terminals 110 and 120 may be a first electrode terminal 110 and a second electrode terminal 120 having different polarities from each other, and may be respectively connected to the first electrode plate 151 and the second electrode plate 152 of the electrode assembly 150.

The first electrode terminal 110 may include a first current collecting terminal 115, and a first terminal plate 111 coupled to the first current collecting terminal 115. Similarly, the second electrode terminal 120 may include a second current collecting terminal 125, and a second terminal plate 121 coupled to the second current collecting terminal 125.

The first and second current collecting terminals 115 and 125 may be withdrawn to outside of the cap plate 110 while penetrating through the cap plate 100. To do this, terminal holes 100' in which the first and second current collecting terminals 115 and 125 are inserted and assembled may be formed in the cap plate 100. In more detail, the first and second current collecting terminals 115 and 125 are inserted from the lower portion of the cap plate 100 to upper portion, and may penetrate through the terminal holes 100' of the cap plate 100.

The first and second current collecting terminals 115 and 125 may respectively include current collecting terminal fixing portions 115a and 125a and current collecting terminal flange portions 115b and 125b that are formed on upper and lower portions of the current collecting terminals 115 and 125 in length directions thereof. For example, the first and second current collecting terminals 115 and 125 may be assembled to penetrate through the cap plate 100, and may include the current collecting terminal fixing portions 115a and 125a exposed to upper portion of the cap plate 100 and the current collecting terminal flange portions 115b and 125b disposed on the lower portion of the cap plate 100.

The current collecting terminal fixing portions 115a and 125a are to fix locations of the current collecting terminals 115 and 125, for example, may be fixed on upper surfaces of the terminal plates 111 and 121 as rivets. For example, the current collecting terminal fixing portions 115a and 125a form flanges expanded from the main body of the current collecting terminals 115 and 125 in a transverse direction (refer to FIG. 2), and may be fixed on upper surfaces of the terminal plates 111 and 121. Concave recesses (not shown) may be formed on upper ends of the current collecting terminal fixing portions 115a and 125a according to pressure of a processing tool (not shown) that rotates at a high speed, and when the processing tool (not shown) presses the current collecting terminal fixing portions 115a and 125a, the upper ends of the current collecting terminal fixing portions 115a and 125 are pushed in the transverse direction to be adhered to the upper surfaces of the terminal plates 111 and 121.

The current collecting terminal flange portions 115b and 125b may have flange shapes that are expanded to have greater outer diameters than those of the terminal holes 100' so that the current collecting terminals 115 and 125 may not escape through the terminal holes 100' of the cap plate 100. Here, the current collecting terminals 115 and 125 are assembled to be inserted into the terminal holes 100' from the lower portion of the cap plate 100. In addition, in a state where the current collecting terminals 115 are supported toward the lower portion of the cap plate 100 via the current collecting terminal flange portions 115b and 125b, the current collecting terminal fixing portions 115a and 125a that are exposed to outer portion of the cap plate 100 are riveted, and thereby fixing the locations of the current collecting terminals 115 and 125.

The current collecting terminals 115 and 125 may be inserted into the terminals holes 100' of the cap plate 100 in a state of being electrically insulated from the cap plate 100. For example, sealing gaskets 113 and 123 may be inserted into the terminals holes 100', and since the current collecting terminals 115 and 125 are inserted into the terminal hole 100' while intervening the sealing gaskets 113 and 123, the current collecting terminals 115 and 125 may be insulated from the cap plate 100. The sealing gaskets 113 and 123 seal peripheries of the terminal holes 100' to prevent leakage of the electrolyte received in the case 180 and prevent infiltration of external impurities.

Meanwhile, lower insulating members 114 and 124 may be disposed between the current collecting terminals 115 and 125 and the cap plate 100 (refer to FIG. 3), and the lower insulating members 114 and 124 may insulate the current collecting terminals 115 and 125 from the cap plate 100. As described above, by disposing the sealing gaskets 113 and 123 around the terminals holes 100', through which the current collecting terminals 115 and 125 penetrate, and interposing the lower insulating members 114 and 124 between the current collecting terminals 115 and 125 and the cap plate 100, the current collecting terminals 115 and 125 and the cap plate 100 may be insulated from each other. The lower insulating members 114 and 124 may be expanded between the current collecting members 117 and 127 and the cap plate 100.

The current collecting terminals 115 and 125 may be electrically connected to the electrode assembly 150 via the current collecting members 117 and 127. The current collecting members 117 and 127 may include current collecting plates 117b and 127b forming lower portions of the current collecting members 117 and 127 and coupled to the electrode assembly 150, and lead portions 117a and 127a forming upper portions of the current collecting members 117 and 127 and coupled to the current collecting terminals 115 and 125.

The current collecting plates 117b and 127b may be coupled to opposite edges of the electrode assembly 150, and may be welded to uncoated portions formed on the edges of the electrode assembly 150, that is, portions of the first and second electrode plates 151 and 152, on which electrode active materials are not formed. For example, the first current collecting plate 117b may be coupled to the uncoated portion of the first electrode plate 151, and the second current collecting plate 127b may be coupled to the uncoated portion of the second electrode plate 152. The lead portions 117a and 127a extend in a direction bent from the current collecting plates 117b and 127b, and may be disposed to face the current collecting terminals 115 and 125. In addition, terminal holes 117' and 127' may be formed in the current collecting members 117 and 127 to be coupled to the current collecting terminals 115 and 125 (refer to FIG. 2). For example, lower end portions of the current collecting terminals 115 and 125 are inserted into the terminal holes 117' and 127' of the lead portions 117a and 127a, and the current collecting terminals 115 and 125 and the lead portions 117a and 127a may face each other. In addition, peripheral portions of the terminal holes 117' and 127' where the current collecting terminals 115 and 125 and the lead portions 117a and 127a contact each other are welded so that the current collecting terminals 115 and 125 and the lead portions 117a and 127a may be coupled to each other.

The terminal plates 111 and 121 may be disposed on the cap plate 100. The terminal plates 111 and 121 are electrically connected to the current collecting terminals 115 and 125, and may provide terminal regions that are wider than the current collecting terminals 115 and 125. The terminal plates 111 and 121 may be connected to the current collecting terminals 115 and 125 (in more detail, the current collecting terminal fixing portions 115a and 125a) by using rivets; however, the present invention is not limited thereto, for example, the terminal plates 111 and 121 may be connected to the current collecting terminals 115 and 125 by using various coupling methods such as welding or screws.

The upper insulating members 112 and 122 may be disposed between the terminal plates 111 and 121 and the cap plate 100. The upper insulating members 112 and 122 may insulate the terminal plates 111 and 121 from the cap plate 100. In another embodiment of the present invention, if the terminal plates 111 and 121 and the cap plate 100 have the same polarity, the upper insulating members 112 and 122 may be omitted.

By way of summation and review, one or more embodiments may provide a secondary battery capable of ensuring a sufficient strength against various pressures applied thereto during assembling and operating. One or more embodiments may provide a secondary battery capable of ensuring a sufficient space for mounting circuit components that control charging/discharging operations.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery, comprising:
an electrode assembly (150);
a case (180) housing the electrode assembly (150); and
a cap plate (100) for sealing the case (180) housing the electrode assembly (150), the cap plate (100) comprising:
a cover portion (100a) that covers the electrode assembly (150);
a support portion (100b) having a first thickness (TS), the support portion (100b) being offset along a first direction from the cover portion (100a); and
a reinforcing portion (100c) that connects the cover portion (100a) and the support portion (100b), the reinforcing portion (100c) having a processing thickness (Tr) that is greater than the first thickness (TS), the first thickness (TS) and the processing thickness (Tr) being measured along the first direction, wherein the reinforcing portion (100c) extends diagonally between the cover portion (100a) and the support portion (100b) wherein the reinforcing portion (100c) is arranged between the cover portion (100a) and the supporting portion (100b) **characterized in that** the support portion (100b) is disposed to face an inner surface of the case (180) and wherein the support portion (100b) is secured to the inner surface of the case (180) such that the cap plate (100) is located lower than an upper end surface of the case (180) and wherein the reinforcing portion (100c) extends along an entire periphery of the cover portion (100a).

2. The battery as claimed in claim 1, wherein the cover portion (100a) has a second thickness (TC) measured along the first direction, the second thickness (TC) being smaller than the processing thickness (Tr).

3. The battery as claimed in one of the preceding claims, wherein the support portion (100b) extends along an entire periphery of the cover portion (100a).

4. The battery as claimed in one of the preceding claims, wherein the cover portion (100a) has opposing long sides and opposing short sides, the reinforcing portion (100c) extending along at least the long sides.

5. The battery as claimed in one of the preceding claims, further comprising a safety vent (108) in the cover portion (100a).

6. The battery as claimed in one of the preceding claims, wherein the reinforcing portion (100c) has opposing upper and lower surfaces (100c1, 100c2), the processing thickness (Tr) being a minimum of a separation of the upper and lower surfaces (100c1, 100c2) along the first direction.

7. The battery as claimed in claim 6, wherein the processing thickness (Tr) is an average of a separation the upper and lower surfaces (100c1, 100c2) along the first direction of the reinforcing portion (100c).

8. The battery as claimed in one of the preceding claims, the support portion (100b) being further from a bottom of the case (180) than the cover portion (100a).

## Patentansprüche

1. Batterie, aufweisend:
eine Elektrodenanordnung (150);
ein Gehäuse (180), das die Elektrodenanordnung (150) aufnimmt; und
eine Deckplatte (100) zum Abdichten des Gehäuses (180), das die Elektrodenanordnung (150) aufnimmt, wobei die Deckplatte (100) aufweist:
einen Abdeckabschnitt (100a), der die Elektrodenanordnung (150) abdeckt;
einen Stützabschnitt (100b), der eine erste Dicke (TS) aufweist, wobei der Stützabschnitt (100b) entlang einer ersten Richtung vom Abdeckabschnitt (100a) versetzt ist; und
einen Verstärkungsabschnitt (100c), der den Abdeckabschnitt (100a) und den Stützabschnitt (100b) verbindet, wobei der Verstärkungsabschnitt (100c) eine Verarbeitungsdicke (Tr), die größer als die erste Dicke (TS) ist, aufweist, wobei die erste Dicke (TS) und die Verarbeitungsdicke (Tr) entlang der ersten Richtung gemessen werden, wobei der Verstärkungsabschnitt (100c) diagonal zwischen dem Abdeckabschnitt (100a) und dem Stützabschnitt (100b) verläuft, wobei der Verstärkungsabschnitt (100c) zwischen dem Abdeckabschnitt (100a) und dem Stützabschnitt (100b) angeordnet ist, **dadurch gekennzeichnet, dass** der Stützabschnitt (100b) um einer Innenfläche des Gehäuses (180) zugewandt angeordnet ist, wobei der Stützabschnitt (100b) an der Innenfläche des Gehäuses (180) derart befestigt ist, dass die Deckplatte (100) niedriger als eine obere Endfläche des Gehäuses (180) angeordnet ist, und wobei der Verstärkungsabschnitt (100c) entlang eines gesamten Umfangs des Abdeckabschnitts (100a) verläuft.

2. Batterie nach Anspruch 1, wobei der Abdeckabschnitt (100a) eine zweite Dicke (TC), die entlang der ersten Richtung gemessen wird, aufweist, wobei die zweite Dicke (TC) kleiner als die Verarbeitungsdicke (Tr) ist.

3. Batterie nach einem der vorhergehenden Ansprüche, wobei der Stützabschnitt (100b) entlang eines gesamten Umfangs des Abdeckabschnitts (100a) verläuft.

4. Batterie nach einem der vorhergehenden Ansprüche, wobei der Abdeckabschnitt (100a) einander gegenüberliegende lange Seiten und einander gegenüberliegende kurze Seiten aufweist, wobei der Verstärkungsabschnitt (100c) entlang zumindest der langen Seiten verläuft.

5. Batterie nach einem der vorhergehenden Ansprüche, ferner aufweisend ein Sicherheitsventil (108) im Abdeckabschnitt (100a).

6. Batterie nach einem der vorhergehenden Ansprüche, wobei der Verstärkungsabschnitt (100c) einander gegenüberliegende Ober- und Unterseiten (100c1, 100c2) aufweist, wobei die Verarbeitungsdicke (Tr) ein Minimum eines Abstands der Ober- und Unterseite (100c1, 100c2) entlang der ersten Richtung ist.

7. Batterie nach Anspruch 6, wobei die Verarbeitungsdicke (Tr) ein Durchschnitt eines Abstands der Ober- und Unterseite (100c1, 100c2) entlang der ersten Richtung des Verstärkungsabschnitts (100c) ist.

8. Batterie nach einem der vorhergehenden Ansprüche, wobei der Stützabschnitt (100b) weiter entfernt von einer Unterseite des Gehäuses (180) als der Abdeckabschnitt (100a) ist.

## Revendications

1. Batterie, comprenant :
un ensemble d'électrodes (150) ;
un boîtier (180) renfermant l'ensemble d'électrodes (150) ; et
une plaque de capuchon (100) pour sceller le boîtier (180) renfermant l'ensemble d'électrodes (150), la plaque de capuchon (100) comprenant :
une partie de capot (100a) qui recouvre l'ensemble d'électrodes (150) ;
une partie de support (100b) ayant une première épaisseur (TS), la partie de support (100b) étant décalée le long d'une première direction vis-à-vis de la partie de capot (100a) ; et
une partie de renfort (100c) qui relie la partie de capot (100a) et la partie de support (100b), la partie de renfort (100c) ayant une épaisseur de traitement (Tr) qui est supérieure à la première épaisseur (TS), la première épaisseur (TS) et l'épaisseur de traitement (Tr) étant mesurées le long de la première direction, la partie de renfort (100c) s'étendant en diagonale entre la partie de capot (100a) et la partie de support (100b), la partie de renfort (100c) étant disposée entre la partie de capot (100a) et la partie de support (100b), **caractérisée en ce que** la partie de support (100b) est disposée de façon à faire face à une surface intérieure du boîtier (180), et la partie de support (100b) étant fixée à la surface intérieure du boîtier (180) de telle sorte que la plaque de capuchon (100) soit disposée plus bas qu'une surface d'extrémité supérieure du boîtier (180), et la partie de renfort (100c) s'étendant le long de la totalité d'une périphérie de la partie de capot (100a).

2. Batterie selon la revendication 1, dans laquelle la partie de capot (100a) a une deuxième épaisseur (TC), mesurée le long de la première direction, la deuxième épaisseur (TC) étant inférieure à l'épaisseur de traitement (Tr).

3. Batterie selon l'une des revendications précédentes, dans laquelle la partie de support (100b) s'étend le long de la totalité d'une périphérie de la partie de capot (100a) .

4. Batterie selon l'une des revendications précédentes, dans laquelle la partie de capot (100a) comporte des côtés longs opposés et des côtés courts opposés, la partie de renfort (100c) s'étendant au moins le long des côtés longs.

5. Batterie selon l'une des revendications précédentes, comprenant de plus un évent de sécurité (108) dans la partie de capot (100a).

6. Batterie selon l'une des revendications précédentes, dans laquelle la partie de renfort (100c) comporte des surfaces supérieure et inférieure opposées (100c1, 100c2), l'épaisseur de traitement (Tr) étant un minimum d'une séparation des surfaces supérieure et inférieure (100c1, 100c2) le long de la première direction.

7. Batterie selon la revendication 6, dans laquelle l'épaisseur de traitement (Tr) est une moyenne d'une séparation des surfaces supérieure et inférieure (100c1, 100c2) le long de la première direction de la partie de renfort (100c).

8. Batterie selon l'une des revendications précédentes, la partie de support (100b) étant plus éloignée d'un fond du boîtier (180) que la partie de capot (100a).
